# EUROPEAN PATENT APPLICATION

(11) **EP 1 175 837 A2**
(43) Date of publication of application: **30.01.2002**
(21) Application number: 01202760.3
(22) Date of filing: 19.07.2001
(51) Int. Cl.: A23G 1/18

(54) **Apparatus for continuous tempering of chocolate mass**

(30) Priority: 25.07.2000 DK 200000237
(71) Applicant: AASTED-MIKROVERK APS, 3520 Farum (DK)
(72) Inventor: Haslund, Henning, 4632 Bjaeverskov (DK)
(74) Representative: Heiden, Finn

(57) **Abstract**

Apparatus (1) for continuous tempering of chocolate butter-containing or other fat-containing chocolate mass comprising at least one mass chamber (2) having a disc-shaped stirring tool (5). The stirring tool (5) comprises two opposite stirring wings (9, 9') and an intermediary disc element (10). Hereby is obtained an apparatus having a disc-shaped stirring element and which is easy as well as economical to produce. Only the stirring wings are needed to be finished so that they suits together with the opposite walls of the mass chamber.

## Description

### Technical field

The present invention relates to the technical field of apparatuses for continuous tempering of chocolate butter-containing or other fat-containing chocolate mass comprising at least one mass chamber with a disc-shaped stirring tool.

The invention further relates to the field of disc elements for use with the above mentioned apparatuses.

The invention also relates to the field of stirring wings for use with the above mentioned apparatuses.

### Prior art

Apparatuses of the introductory art having disc-shaped stirring tools are known, which are manufactured by a costly procedure, by which blades are either welded on to a disc, or by which the complete disc with blades are moulded in one piece. A succeeding finishing is necessary to achieve the required tolerances with the adjacent walls of the mass chamber.

The known disc-shaped stirring tools are furthermore locked in their geometry. Consequently, several stirring tools with different geometries have to be available, if it is desired to use a stirring tools with a different geometry, for example having differently shaped wings, other configurations of flowing gaps for the mass, etc.

### Core of the invention

The apparatus according to the present invention is novel in that the stirring tool comprises two opposite stirring wings and an intermediary disc element.

Hereby is provided an apparatus having a disc-shaped stirring tool, which is both easy and cheap to manufacture. Only the stirring discs require succeeding finishing, so that they fits nicely together with the adjacent walls of the mass chamber.

The new stirring tool is furthermore especially flexible, as the disc element or even the stirring wings are easy to replace with parts having other geometries fulfilling particularly required treatments of the mass in the chamber. The flow of the mass around the stirring tool may for example be altered from at the area at the centre and to the area at the periphery by changing the disc with one having a different geometry.

By an especially expedient embodiment of the apparatus according to the invention, the two opposite stirring wings are arranged 90° in relation to each other and the four circle sectors between the stirring wings are covered by the disc element. Hereby is achieved, that the two oppositely arranged stirring wings support the disc element, so that the disc element is kept stable during the turning of the stirring tool in the mass chamber.

Known wing profiles, which have through-tested geometries proven to be effective, may according to the invention be made in two half parts, which in an assembled state would be identical to the known stirring wings. The two half parts are advantageously turned 90° in relation to each other and the disc element is placed between them free of further projecting parts.

Accordingly, a great advantage is, that in the known tempering apparatuses where the known wing profiles already have proven to be especially effective, they may be replaced under a simple operation with the new inventive disc element arranged between the two new accompanying, opposite stirring wings replacing the complete geometry of the prior stirring wing, whereby among others an improved stirring effect is achieved in the mass.

According to a further embodiment it has proven to be expedient, that through-openings for the flow of the mass at the centre are arranged at least in the stirring wings, and that the disc element extends in essential all the way to the outer periphery of the mass chamber for closing of the flow of the mass between the disc element and the outer periphery of the mass chamber.

An other advantageous embodiment according to the invention provides openings for the through-flow of the mass between the outer periphery of the disc element and the outer periphery of the mass chamber.

According to a further embodiment, the side of the stirring wing facing away from the disc element may comprise projecting parts such as mixing or scraping blades or knobs. Hereby is achieved a uniform mixing and stirring of the chocolate mass and that the adjacent wall, such as the wall of a water chamber is being scraped.

Especially advantageous has proven to be when the disc element according to a further embodiment comprises recesses, which fits together with the stirring wings for preventing mutual angular rotation between the elements during the movement of the stirring tool in the mass chamber.

According to a further expedient embodiment of the invention, the disc element comprises two plate-shaped parts, which are joined at the centre as well as at the outer periphery. Thereby is obtained a space in between the plate-shaped parts, which may be filled with different liquids, gases or solid materials so that the disc element can be used as a barrier in the inner of the mass chamber.

According to another embodiment, the disc element is free of projecting parts, such as stirring or scarping blades or knobs.

By a further expedient embodiment, the disc element has wedge-shaped cross-section, which tapers in direction towards the outer periphery. Hereby is obtained, that the majority of the diameter of the disc element contributes with an essentially constant shear force to the mass during rotation.

The shear force is defined as the product by multiplication of the viscosity and the shear gradient. The shear gradient is defined as the velocity difference between two opposite surfaces divided by the distance between them. The unit of shear gradient is s⁻¹.

The distance is of the gap or slit between the stirring tool and the opposite wall, through which gap or slit the mass flow.

According to a further preferred embodiment the two stirring wings may essentially be identical.

### Detailed description of preferred embodiments

The invention is explained below by referring to especially preferred embodiments and the drawing, in which
Fig. 1 is a schematic view in vertical axial section of the apparatus according to the invention,
Fig. 2 is a view from above of a stirring tool according to the invention arranged in a mass chamber,
Fig. 3 is a view of a stirring wing of the stirring tool, viewed from the side facing the disc element,
Fig. 4 is a view from the side of a cross-section of the stirring wing disclosed in figure 3,
Fig. 5 is a view of the stirring wing according to the invention viewed from the side facing away from the disc element and towards the wall of the mass chamber,
Fig. 6 is a view from above of the disc element according to the invention,
Fig. 7 is a view in cross-section of the disc element disclosed in figure 6,
Fig. 8 is a view in axial cross-section of the stirring tool arranged in the mass chamber,
Fig. 9 is a view in cross-section of another embodiment of the stirring tool according to the invention, and
Fig. 10 is a view of a third embodiment of the stirring tool according to the invention.

All of the figures of the drawing are schematic and does only show parts which are necessary for disclosing the invention, while other parts are omitted or only indicated. Corresponding numerals are used in all figures for identical or corresponding details.

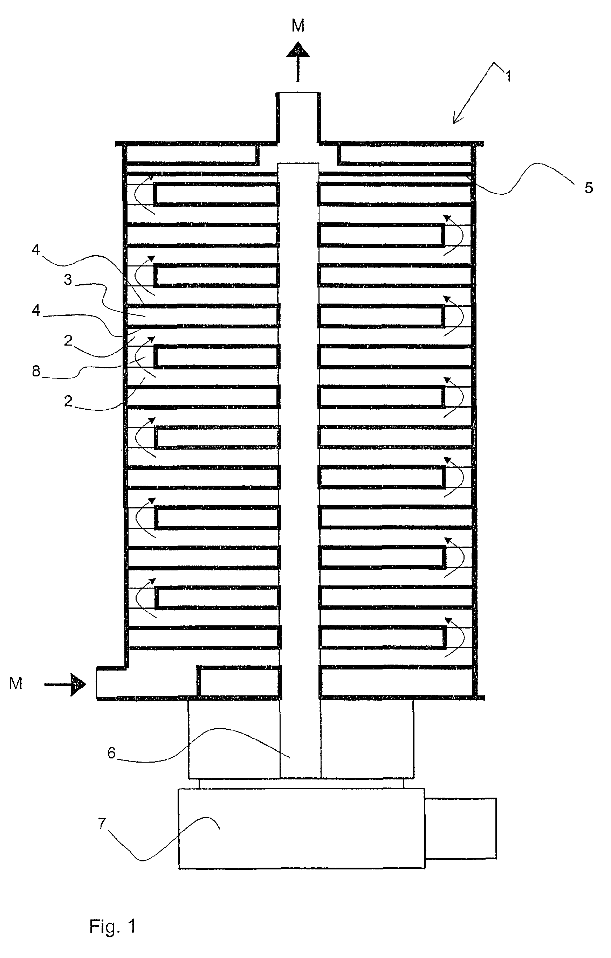

The apparatus 1 disclosed in fig. 1 comprises a number of round mass chambers 2 and intermediary water chambers 3. The water chambers 3 and the mass chambers 2 are separated by intermediary disc-formed walls 4. In each mass chamber 2 are especially arranged a stirring tool 5 of which only one is depicted. The stirring tool 5 is rotated by means of a central, vertical axel 6, which is rotated by a motor 7.

By means of a pump, which is not disclosed, the mass is forced to flow through the apparatus 1 having an essentially vertical direction M, which in the disclosed embodiment is from the bottom and to the top. In each mass chamber 2, the mass is exposed to a stirring tool 5 as well as to cooling or heating through the water chambers 3. The mass chambers 2 are mutually connected through openings 8, which are arranged at the periphery of the apparatus 1 or at the centre close to the vertical axle 6.

The circuits for transportation of the water in the water chambers 3 are omitted for clarity and because these may be elaborated arbitrarily within the inventive idea.

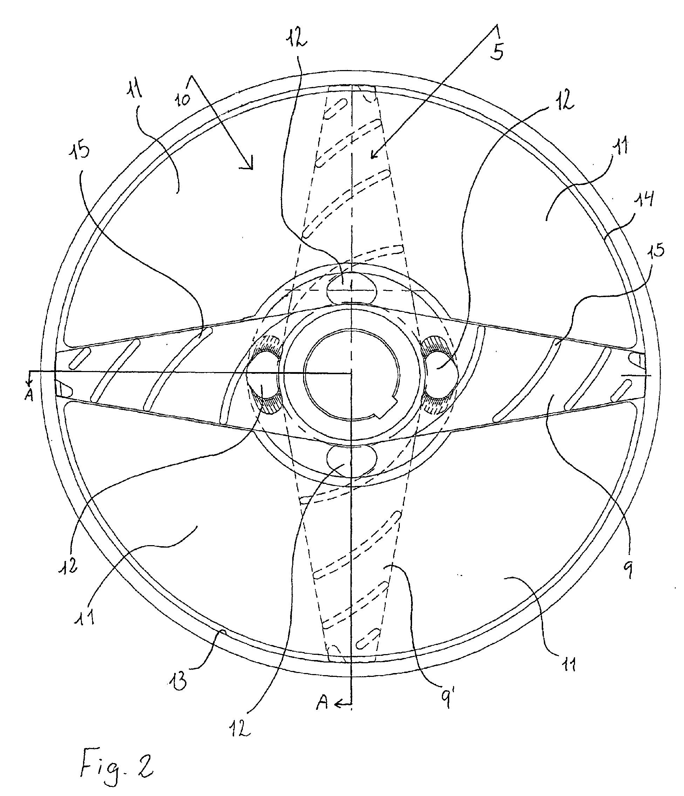

Fig. 2 discloses a disc-shaped stirring tool 5 according to the invention. The stirring tool 5 comprises two opposite stirring wings 9, 9' and an intermediary disc element 10. The stirring wing 9' is disclosed in stippled line as it is arranged on the opposite side of the disc element 10 in relation to the stirring wing 9.

By that embodiment the two oppositely arranged stirring wings 9, 9' are turned 90° around the axle 6 in relation to each other, and the four circle sections 11 between the stirring wings 9, 9' are covered by the disc element 10.

By the mentioned embodiment the stirring wings 9, 9' does furthermore comprise through-flow openings 12 for the mass at the centre. The disc element 10 extends essentially all the way to the outer periphery 13 of the mass chamber with the purpose of closing of the flow of mass between the periphery 14 of the disc element and the outer periphery 13 of the mass chamber.

By other embodiments of the stirring wing further through- flow openings for the mass may be arranged along the extension of the wing.

The stirring wings 9, 9' may advantageously be made of metal, such as cast iron, bronze or stainless steel moulded in one piece or assembled of several parts.

At the sides of the stirring wings 9, 9' facing away from the disc element 10 are arranged projecting parts 15, such as stirring or scraping blades or knobs. Hereby, the mass is mixed simultaneously as the parts 15 scrapes or wipes off mass along the wall 4 between the mass chamber 2 and the adjacent water chamber 3.

The case may be, that the projecting parts extends outwardly in direction towards the inner periphery of the mass chamber with a convex curvature. The projecting parts are placed, so that the complete adjacent wall is wiped off omitting areas not being wiped by the depicted embodiment.

The elaboration of the curved, projecting parts furthermore secures, that the mass is forced to flow radially out from the centre and radially towards the centre respectively during the rotation of the stirring wings.

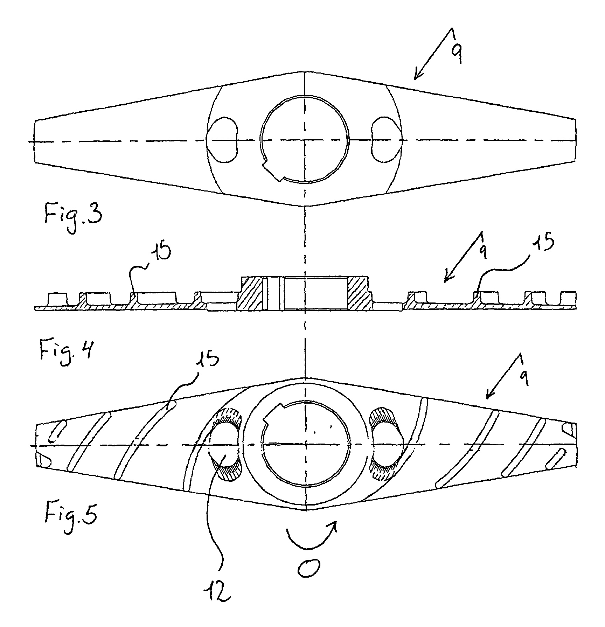

The stirring wing 9 is in fig. 3 disclosed from the side facing in towards the disc element and is in fig. 4 disclosed as a cross-section. Hereby is clearly disclosed, that the projecting parts 15 extends vertically from the stirring wing 9.

By an especially preferred embodiment according to the invention, the two oppositely arranged stirring wings are essentially identical.

Fig. 5 discloses the side of the stirring wing 9 facing away from the disclosed disc element. By such embodiment the through-flow openings 12 are arranged at the centre. The scraper blades 15 are arranged so that during rotation of the stirring wing anti-clock wise O, the mass is forced by the confrontation with the blades 15 in towards the through-flow openings 12 at the centre.

The stirring wing 9 is disclosed having a profile in which the width of the wing is tapered towards the periphery. According to the inventive idea the stirring wings may in other embodiments be elaborated with more than two wing parts extending from the centre.

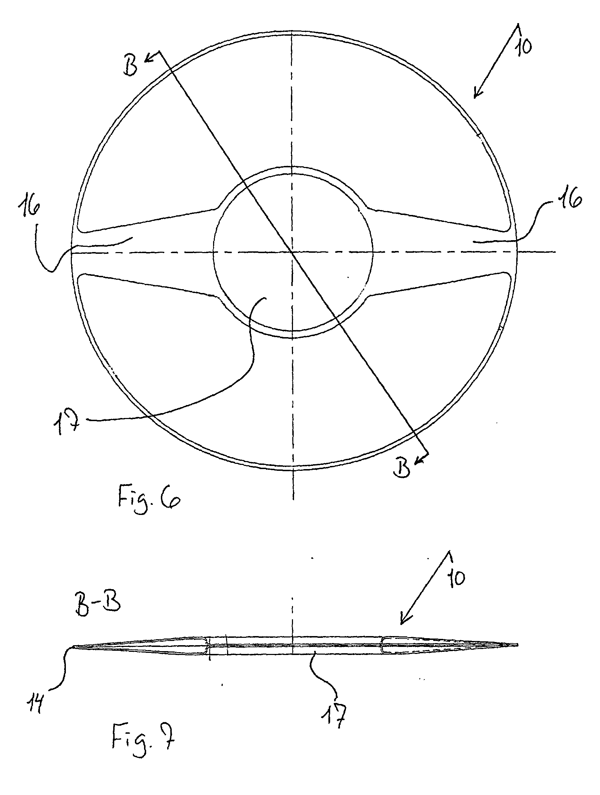

The disc element 10 depicted in fig. 6 comprises recesses 16, which fits together with the stirring wings and avoids mutual angularly turning of the elements in relation to each other during the movement of the stirring tool in the mass chamber. An opening 17 for the central drive shaft is furthermore arranged.

The recess 16 corresponds in essential with the picture of the stirring wing as seen from above.

By such embodiment the disc element is turned by the movement of the stirring wings being rotated by the shaft.

The disc element may comprise two plate-shaped parts, which are connected around the centre as well as at the outer periphery. A gap is thereby obtained between the plate-shaped parts. The gap or space may comprise a liquid, such as nitrogen, or may simply be free of air. The gap may also be filled out with a solid material or isolating material. Hereby is obtained, that the disc element can be used as an isolating barrier in the middle of the mass chamber.

The disc element may also be manufactured of a stainless steel or of a plastic/fibre material. The disc element may furthermore within the inventive idea be covered by a thin layer of heat-reflecting materials, such as layers of metal, plastic or paint having heat reflective or friction-reducing abilities.

In fig. 6 the disc element 10 is furthermore disclosed as being free of projecting parts, such as mixing- or scraper blades or knobs.

Basically, according to the invention the projecting parts are arranged on the stirring wings, however, projecting parts may be arranged at the disc element as well.

Fig. 7 discloses the cross-section B-B in fig. 6 of the disc element 10. The disc element 10 is here disclosed having a wedge-shaped cross-section tapering in direction towards the outer periphery 14. Hereby is obtained, that the major part of the diameter of the disc element contributes with an essentially constant shear force to the mass during rotation.

By another embodiment according to the invention, the cross-section of the disc element is the same along the diameter or it may have a convex or concave form. The matter may also be, that the cross-section is reduced step-wise towards the periphery.

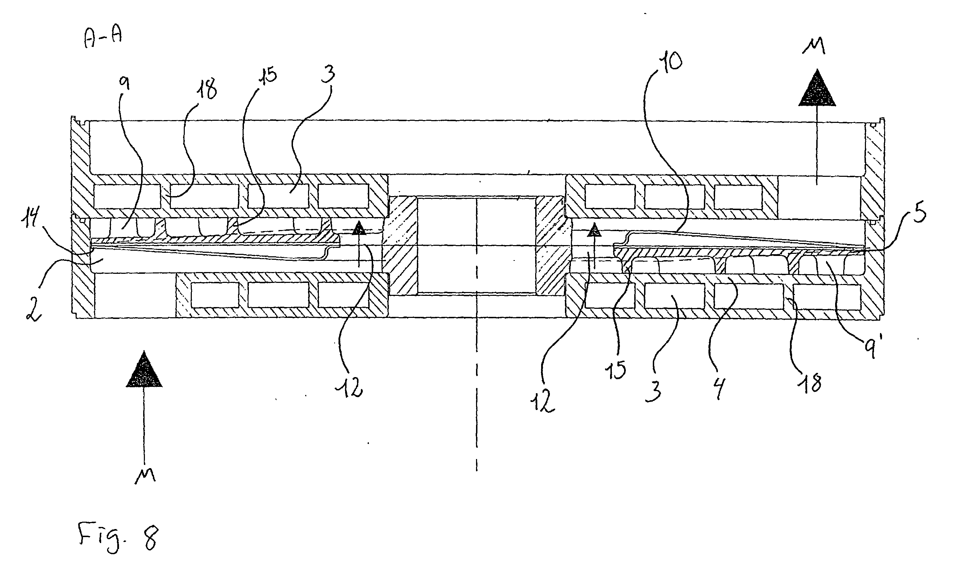

In fig. 8 an embodiment of the stirring tool 5 is disclosed schematically implemented in a mass chamber 2. On both sides of the mass chamber 2 is water chambers 3. The water chambers 3 are disclosed having parting walls 18, so that the water flowing in the chamber can be controlled. The disc element 10 is made of two plate parts and the cross-section tapers in direction towards the outer periphery 14. The projecting parts 15 of the stirring wings 9, 9' are here disclosed extending all the way up to the disc-shaped wall 4, which separates the mass chamber 2 and the water chamber 3. Hereby is obtained, that the walls 4 is wiped completely free of mass.

The flow of the mass through the chamber is depicted by the arrows M, in this embodiment the mass furthermore flow through the openings 12 at the centre of the stirring wings 9, 9'.

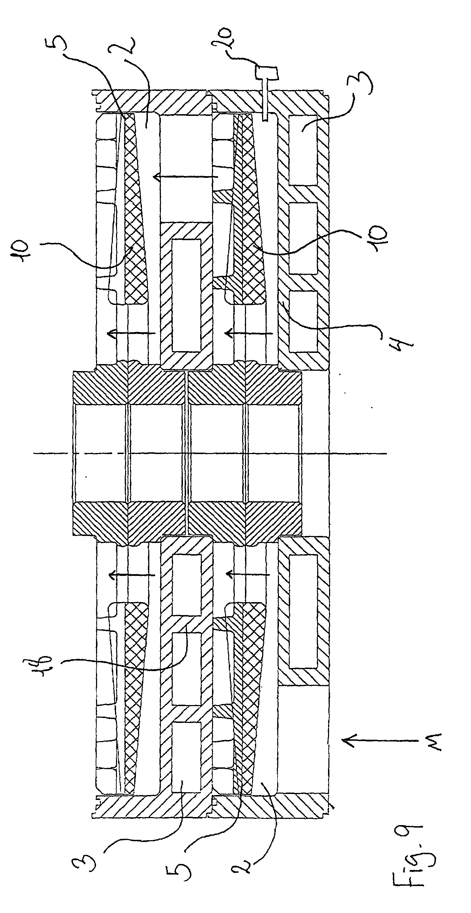

In fig. 9 is depicted a section picture of another embodiment of the stirring tool 5 according to the invention. The stirring tool 5 is here depicted in two succeeding mass chambers 2 having an intermediary water chamber 3. The disc element 10 is by this embodiment made of a solid material such as plastic. The water chambers 3 have parting walls 18. The flow of the mass is here indicated with arrows M. The matter is, that the mass is forced around in the mass chamber 2 so that the major part of the mass comes into contact with the wall 4 separating the mass chamber 2 and the water chamber 3. It is of the water temperature in the water chamber 3, and which exposes the mass to the predetermined temperature procedure.

Fig. 9 furthermore discloses a temperature sensor 20 for measuring the mass temperature. This temperature sensor 20 is arranged directly in the mass chamber 2, so that the temperature of the mass is measured exactly in the chamber.

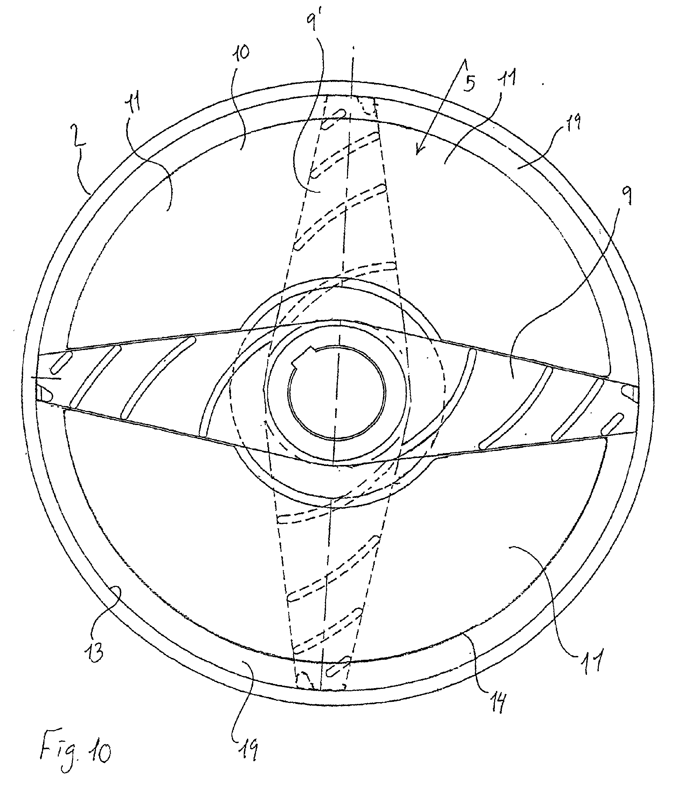

Fig. 10 discloses yet another embodiment of the disc-shaped stirring tool 5 according to the invention. The stirring tool 5 comprises two oppositely arranged stirring wings 9, 9' and an intermediary disc element 10. The stirring wing 9' is disclosed in stippled line as it is being arranged at the opposite side of the disc element 10 than the stirring wing 9.

By this embodiment the two oppositely arranged stirring wings 9, 9' are turned 90° in relation to each other around the shaft 6, and the four circle sections 11 between the stirring wings 9, 9' are covered by the disc element.

Between the outer periphery 14 of the disc element 10 and the outer periphery 13 of the mass chamber 2 is arranged a through flow opening 19 for the mass. This embodiment is especially usable when openings between the mass chambers are arranged at the centre close to the vertical shaft.

The stirring wings 9, 9' are by this embodiment disclosed without through flow openings.

Consequently, many changes may be made without deviating from the inventive idea.

## Claims

1. Apparatus (1) for continuous tempering of chocolate butter-containing or other fat-containing chocolate mass comprising at least one mass chamber (2) having a disc-shaped stirring tool (5), **characterised by**, that the stirring tool (5) comprises two opposite stirring wings (9, 9') and an intermediary disc element (10).

2. Apparatus (1) according to claim 1, **characterised by**, that the two opposite stirring wings (9, 9') are turned 90° in relation to each other and that the four circle sections (11) between the stirring wings (9, 9') are covered by the disc element (10).

3. Apparatus (1) according to claim 1, **characterised by**, that at least the stirring tools (9,9') comprise through-flow openings (12) for the mass at the centre, and that the disc element (10) extends essentially all the way to the outer periphery (13) of the mass chamber for closing off the through-flow of mass between the disc element (10) and the outer periphery (13) of the mass chamber.

4. Apparatus (1) according to claim 1, **characterised by**, that a through-flow opening (19) for the mass is arranged between the outer periphery (14) of the disc element (10) and the inner periphery (13) of the mass chamber (2).

5. Apparatus (1) according to claim 1, **characterised by**, that the side of the stirring wing (9) facing away from the disc element (10) comprise projecting parts (15) such as stirring or scraper blades or knobs.

6. Apparatus (1) according to claim 1, **characterised by**, that the disc element (10) comprises recesses (16), which fits together with the stirring wings (9, 9') for avoiding mutual angularly turning between the elements during the movement of the stirring tool (5) in the mass chamber (2).

7. Apparatus (1) according to claim 1, **characterised by**, that the disc element (10) comprises two plate-shaped parts, which are joined around the centre as well as at the outer periphery.

8. Apparatus (1) according to claim 1, **characterised by**, that the disc element (10) is free of projecting parts such as mixing- or scraping blades or knobs.

9. Apparatus (1) according to claim 1, **characterised by**, that the disc element (10) has wedge-shaped cross section tapering towards the outer periphery (14).

10. Apparatus (1) according to claim 1, **characterised by**, that the two stirring wings (9, 9') are essentially identical.

11. Disc element (10) for a stirring tool (5) in a mass chamber (2) in an apparatus (1) for continuous tempering of chocolate butter-containing or other fat-containing chocolate mass , **characterised by**, that the disc element (10) is essentially free of projecting parts such as mixing- or scraping blades or knobs, and comprises engagement parts, which are adapted to secure stirring wings and disc element against mutual turning therebetween during the movement of the stirring tool.

12. Stirring wing (9) for a stirring tool (5) in a mass chamber (2) in an apparatus (1) for continuous tempering of chocolate butter-containing or other fat-containing chocolate mass , **characterised by**, that the stirring wing (9) on the one hand comprises projecting parts such as mixing- or scraping blades or knobs and on the other hand comprises engagement parts, which are adapted to secure stirring wings and disc element against mutual turning there between during the movement of the stirring tool.
